Europäisches Patentamt

European Patent Office

Office européen des brevets

(11) Publication number: **0 185 904 B1**

## (12) EUROPEAN PATENT SPECIFICATION

(45) Date of publication of patent specification: **11.03.92**  (51) Int. Cl.⁵: **G06F 15/20**

(21) Application number: **85114355.2**

(22) Date of filing: **12.11.85**

(54) Tailored document building.

(30) Priority: **26.12.84 US 686565**

(43) Date of publication of application:
**02.07.86 Bulletin 86/27**

(45) Publication of the grant of the patent:
**11.03.92 Bulletin 92/11**

(84) Designated Contracting States:
**DE FR GB IT**

(56) References cited:
**EP-A- 0 059 349**
**EP-A- 0 083 989**
**GB-A- 2 043 311**

**D.R. MYERS: "A background to computer graphics", CERN Data Handling Division, 21st July 1983, pages 2-44, Geneva, CH.**

**IEEE TRANSACTIONS ON COMMUNICATIONS, vol. COM-29, no. 12, December 1981, pages 1891-1897, IEEE, New York, US; P.C. PUGSLEY: "Pre-press picture processing in the graphic arts industry"**

**IEEE Computer Society workshop on Computer Architektur for Pattern Analysis and Image Database Management, Nov. 11-13, 1981, pages 301-308**

(73) Proprietor: **International Business Machines Corporation**
**Old Orchard Road**
**Armonk, N.Y. 10504(US)**

(72) Inventor: **Hernandez Hernandez, Irene**
**5405 Gloucester Lane**
**Austin Texas - 78723(US)**
Inventor: **McCaskill, Rex Allen**
**4508 Bridlewood Drive**
**Austin Texas - 78727(US)**

(74) Representative: **Bonin, Jean-Jacques**
**Compagnie IBM France Département de Propriété Intellectuelle**
**F-06610 La Gaude(FR)**

## Description

### Technical Field

This invention relates generally to document editing, and more specifically to a method of, and system for, specially tailoring a master document.

### Background Art

Document tailoring or new document creation utilizing a master document as a basis has up to now been a batch, cut and paste, etc., type of editing operation. An operator using an application driven device controlled display standalone, or host connected, computer work station or system today can cause the master document to be loaded into memory from a disk, and begin displaying and scroll through the document. Undesired portions can be deleted and desired portions can be edited. On paper, this sounds simple and straightforward. However, much attention, time, and keying are required. A single character can be deleted with very few keystrokes, but paragraphs must be cursored and bracketed prior to deletion.

To aid in document tailoring, split screen facilities or application programs are available for viewing and comparing various portions of the master document in a side-by-side manner. In using these facilities, one can, for example, create two view ports and cause one portion to be displayed on the top half of a display screen and a different portion to be displayed on the bottom half of the screen. Side by side viewing is also possible. In addition, capabilities have been provided to further divide the screen. Commonly, on the first division the screen is divided into halves, on the second division the screen is divided into fourths, etc.

In recent times, windowing systems or applications have become popular. Different portions of a document can be reviewed and compared, but separate windows must be created. Creating separate windows requires operator time, effort, and attention. In addition, to meet as many operator wants or needs as possible, users have increased the applications' capability to the extent that windows can be increased or decreased in size. This can be for purposes of either magnification or increasing the size of the portion of the document being viewed.

As an illustration of the above quoted windowing systems, document EP-A-59 349 discloses a data display and management system which provides for means permitting a segmentation of a display screen in a plurality of independently controllable vertical and horizontally split regions or windows. Smooth or discrete scrolling operations may be performed in any horizontal or vertical split region. The system is said to facilitate editing functions, but inserting/deleting lines and scrolling are those only "editing functions" which are referred to in the text.

The article entitled "A Background to Computer Graphics", by D.R. Myers, published by the CERN (Geneva) on 21 July 1983, also discloses a windowing system, where a plurality of windows is displayed on a terminal screen. The user can interact with the contents of any of the windows. Facilities are provided to change the size and position of any window, or scroll the contents of windows up or down and left or right. That article also briefly evokes the possibility to cut a piece of text out of one file and paste it into another.

S. M. Goldwasser's article entitled "A generalized segment display processor architecture", published in IEEE Computer Society Workshop on Computer Architecture for Pattern Analysis and Image Database Management, November 11-13, 1981, pages 301-308, discloses a logical architecture for an image processing and display system, for the generation of complex multisegment page configurations. All manipulations of data objects aim at composing a page, not at creating a complete, special document. The various data objects are selected from a segment descriptor memory, not from a master document, and are not obtained by scrolling data objects within a plurality of windows to position and select desired portions thereof, with a view to arrange them in a specific desired order, in a special document.

Indeed, none of above quoted documents teaches the possibility of generating a tailored document from a plurality of data objects making up a master document, by selecting those desired portions of the tailored document, through windowing and scrolling operations, and storing all said desired portions so that they will be properly arranged to contitute the tailored document.

In the present invention, a specially tailored document is built from a plurality of windowed portions of the master document displayed on a screen at the same time. Each window provides a view port into a portion of the master document and the portion can be scrolled in the window to select that is to be included in the tailored document. The windows are system generated and are used to automatically bracket information or data which an operator desires to be included in the tailored document. The advantages of this advance are reduced operator attention, keying, and confusion.

### Disclosure of the Invention

A unique method of, and system for, building a specially tailored document from a master document are provided to improve user friendliness and system flexibility, and reduce operator attention, as claimed.

## Brief Description of the Drawing

Fig. 1 illustrates a document previously edited with multiple data objects on the page.

Fig. 2 illustrates a view of the entire data area of a data object which is not all visible within the object window.

Fig. 3 illustrates the results of scrolling the data within the object window to view different data.

Fig. 4 illustrates enlarging the window to view more data in the data area.

Fig. 5 is a flow chart which illustrates operations performed in tailoring a master document according to the invention.

## Best Mode for Carrying Out the Invention

### General Overview and Definitions

As a preferred embodiment, the instant invention will be packaged as, or included in, an application program. For purposes of conciseness, application program will be abbreviated to application hereinafter. The application will have been written by a user or programmer for use in either a word processing or computing system operable by an operator. The systems contemplated include standalone and host connected device controlled display work stations. The system display will preferably be of an all-points-addressable (APA) cathode ray tube (CRT) type. The face of the display will be referred to as a screen. When a window is created, only a portion of the screen will be occupied by the window which will generally be bordered. When created, a window of default size will be presented to the operator. The window can thereafter be moved, and either enlarged or diminished in size. As a practical matter, the window can be varied in size from very small up to a point that it fills the entire screen. Window manipulation in terms of locating and sizing on the screen, as a broad concept, is well known and forms no part of the instant invention. The term document is meant to include storable and retrievable information. The information can be in the form of text, graphics, tables, etc., which will be referred to hereinafter as data types.

Device control includes control of the display by a keyboard, joy stick, light pen, mouse, scratch pad, etc., or any combination of such devices. By system control is meant hardware and/or software control of the system.

For the following detailed description, it is to be assumed that at the beginning of operation for creating the master document, a menu is presented to the operator. The operator can select a data type such as a graphic object, table, etc., along with other parameters such as margin settings, etc., by keying to the menu. Keying to the menu results in a data object being defined or specified. Upon completion of keying to the menu, the system will cause a window to be built on the screen into which data can be input. The data input into the window can be much larger than the window. For example, if a text data object has been specified for one portion of the document to be built, the text input into the window can be several physical pages long. Handling of the excess text is by scrolling in the window during input. Compared to the window size, the text can be many times larger. Upon completion of input of the data object or portion of the document being built, the menu is recalled. A different data object can then be specified. Upon completion of defining this new data object, the system will cause another window to be built on the screen below the previous window. At this time, displayed in the previous window will be the last part of the data input up to window size limitations. Ultimately, the screen will be filled with windows. When this occurs and a new data object is specified, the system will cause the windows already on the screen to be scrolled to provide room for another window.

Each data object created in the above manner is stored in order of creation. The windowed data at the completion of input is also stored in the order the windows are created. Stored along with each of the windowed data is a pointer to a corresponding data object.

At the beginning of operation for purposes of the following description, a plurality of windows containing the windowed data are called and displayed on the screen. When one of the windows is selected, a view port is opened through the window into the corresponding data object. The view through the view port is of the same data windowed in the window prior to selection. Thereafter, the data object can be scrolled in the selected window for selecting a desired portion of the data object for inclusion in the document being tailored from the master document which is made up of the data objects.

Selection of the window can be by means of a mouse controlled pointing cursor and a select button on the mouse. Selection of a portion of the data object for inclusion in the tailored document can also be by mouse button depression. The extent of selection of a portion of the data object is defined by the window size. This avoids normal bracketing and defining operations.

### Detailed Description

For a more detailed understanding of the invention, it is to be assumed that use is of a standalone keyboard/display computing system such as an IBM Personal Computer configured with a keyboard, an APA display, a black and white monitor, a graphics adaptor, a disk drive, an operating system, a mouse, sufficient working memory, and diskettes containing the master document and an application containing the instant invention. Further assume the system has been powered on, etc., and that the application of this invention has been loaded and is running.

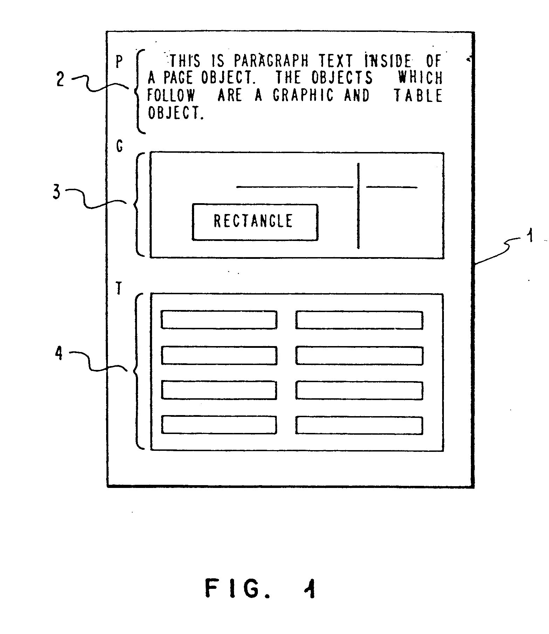

Reference is now made to Figure 1. In this figure there is illustrated a screen 1. When the operator begins an editing session and specifies a document to be edited which was created previously, the application displays the data objects of the document within on screen 1. Text data object 2, graphic data object 3, and table data object 4 represent the data objects contained within the document.

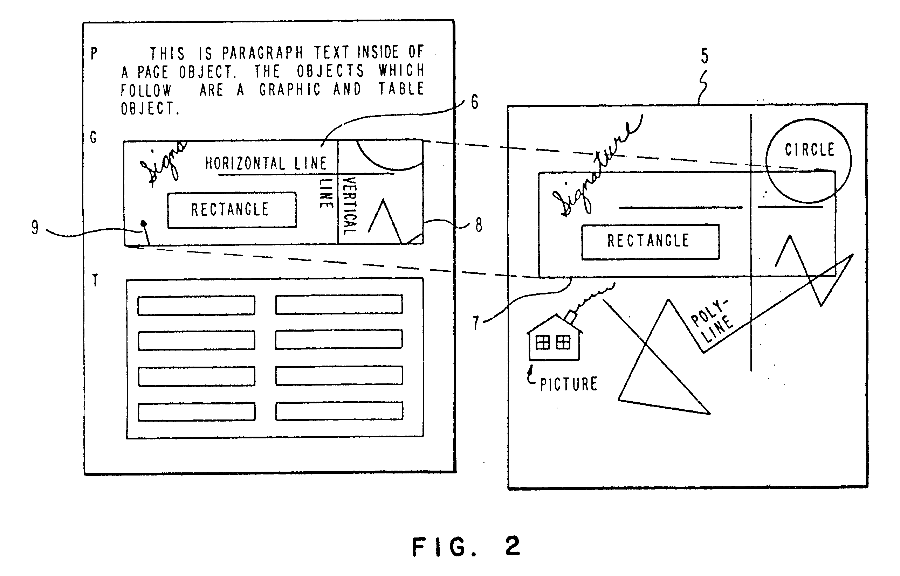

Referring to Fig. 2, data area 5 represents the entire data belonging to the data object 6. Only the portion 7 is currently visible through object window 8. When operation is within the window, the point of operation can be denoted by a cursor 9. As cursor 9 is moved by a device, the point of operation is moved. The device can be a mouse, keyboard, joystick, etc. The particular characteristics of cursor 9 are unimportant as far as this invention is concerned. That is, the cursor could be a standard textual type cursor, etc. Cursor location and movement are directly related to editing. Editing encompasses insertion, deletion, replacement, etc., operations. Cursor 9 as shown in Fig. 2 denotes the data object selected and to be scrolled.

When the operator performs a scrolling action of the data within object window 8, the contents within object window 8 will scroll. The effects of this action will result in the operator viewing a different portion of the data within the window.

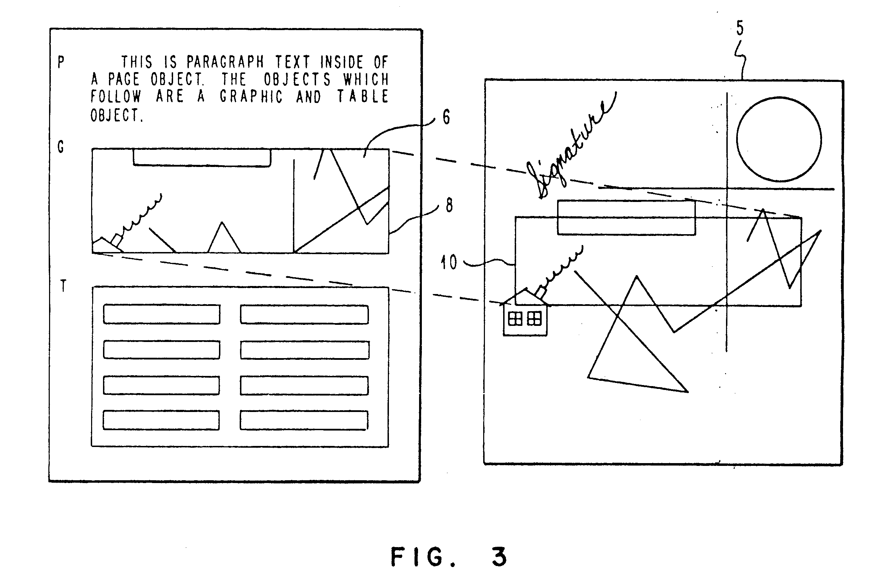

Fig. 3 represents the data object 6 following operator scrolling. Object window 8 is displaying the data represented by portion 10. The entire data belonging to the object resides in data area 5.
Next, the operator requests that the size of the object window 8 be increased to allow more of the data in the data area 5 to be viewed.

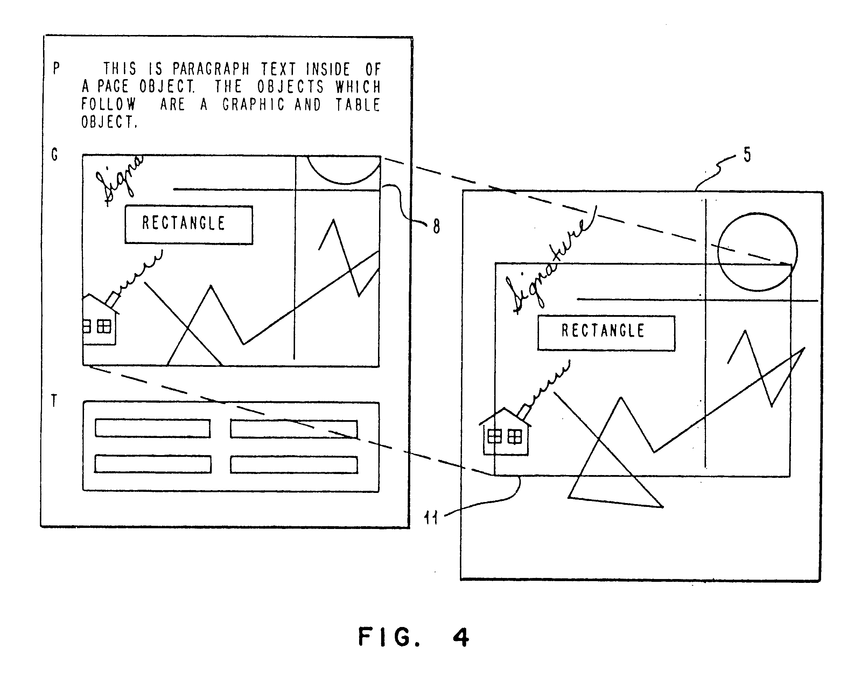

Referring to Fig. 4, object window 8 has been increased in size to accommodate more data from the data area 5. The portion viewed through window 8 is represented by portion 11.

Set out below is an illustration of an application program useable by a process or in the workstation or host for tailoring a master document according to this invention. This program is in program design language from which source and object code are derivable.

When the application program initiates an editing session, a routine is called to generate the internal structure of the document (CALL GET_DOC_DATA). If a new document is being created by the operator, an empty document structure is created. If a document already exists, the structure of the document will consist of all the data objects created by the operator in a previous editing session. When the document structure is complete, the application calls a routine to allocate a 'parent' document window (CALL ALLOCATE_DOC_WINDOW) and then calls a routine to prepare the data objects to be displayed on the screen (CALL SET_DOC_VIEW). A pointer to the object which should be displayed at the top of the screen is input to this routine. This routine traverses through the document structure looking for data objects. For each object in the structure, the routine interfaces with the windowing system to allocate a window ('a child window of the parent') and a data area. The data area is a buffer which contains all the information pertaining to a data object. The routine translates the object data into the data area. The allocated window is of a fixed size defined by the operator or system at the time the object was edited last. The allocated window may also be smaller than the data in the object's data area. A link is maintained between the data object and its respective window and data area. Information about the positions of the objects on the page are also maintained. This routine will translate enough data objects necessary to generate a screen full of information. When all translation necessary has occurred, the routine displays the data on the physical screen. The application, upon completion of displaying the document, enters a state in which the movement of the pointing cursor is being monitored for editing purposes.

As the application monitors input from the operator (CALL MONITOR_INPUT) several operator actions may occur. If an action occurred (e.g., move, copy, delete), the application calls a routine to process the command (CALL PROCESS_COMMAND). If the operator specifies that a data object is to be created, the application gets the data object's attributes such as window height and margins by calling a routine (CALL GET_OBJECT_ATTRIBUTES). The application then creates a data object internally and links the data object into the document structure. The placement of the created data object within the document structure is dependent on the selected location in the document where the operator requested the creation of the data object. The data object will be linked following the last data object at the selected location. After the data object is created, the application calls a routine (CALL REDISPLAY_DOC) to display an updated view of the document contents. This routine determines that a new object has been created, and that a window and data area do not exist for the object and will create them. The placement of the object in relation to the other objects in the document are maintained.

If the operator requested that the size of the data object's window be adjusted (either increased or decreased), the application calls a routine to set the window attributes of the selected data object in the document structure (CALL SET_OBJECT_ATTRIBUTES). The application then calls a routine (CALL REDISPLAY_DOC) to redisplay the updated view of the document contents, and the new size of the data object's window will be reflected.

If the operator action to occur is to edit the data within the data object's window, a routine is called to determine which data object window and associated data area is to be edited (CALL GET_WINDOW_PTR). Depending on the type of data (CALL GET_AREA_TYPE) in the data object's window, a routine is called to handle the creation and editing process for the type of data. A routine (CALL EDIT_DRAW) is called if draw graphics data is to be created or edited. A routine (CALL EDIT_BUS) is called if business graphics data is to be created or edited. A routine (CALL EDIT_TABLE) is called if table data is to be created or edited. A routine (CALL EDIT_TEXT) is called if text data is to be created or edited. The edit routines are responsible for inserting the data into the objects data areas as data input occurs and for issuing a redisplay of the changed data object contents. The routines also monitor when the data has reached the window boundary so that information scrolling can occur. Upon completion of editing the data object, the application will remember the last view of the data as shown within the data object's window.

If the operator action which occurred is scrolling of the data, the application determines what type of scrolling is to occur (CALL GET_SCROLL_MODE_TYPE). If scrolling of the object's data area within the window is to occur, a routine is called to determine which data object window and associated data area is to be scrolled (CALL GET_WINDOW_PTR). A routine is then called to determine how much of the data to scroll (CALL GET_SCROLL_AMT). Once the scroll amount has been determined, a routine is called to reset the view of the data within the object's window (CALL SET_WINDOW_VIEW). If it is determined from the call to SET_WINDOW_VIEW that not enough data exists within the data area to complete the scrolling process, a routine is called (CALL GET_DATA) to fetch more data into the data area. The scrolling is complete when the specified scroll amount has been reached or no more data exists for the object (UNTIL SCROLL_COMPLETE OR NO_MORE_DATA) The cursor location is updated (CALL SET_CURSOR_LOCATION) and a routine is called (SAVE_WINDOW_VIEW) to save the current view of the data within the window. If the type of scrolling to occur is document scrolling, normal scrolling of the document (CALL SET_DOC_VIEW) will occur. The view of the data object within the data objects windows are locked and will not change as the document is scrolled. The view of the data within the object's window is remembered when the call to SAVE_WINDOW_VIEW was made as defined above. If the operator elects to terminate the editing session or scroll the data object back into view, the last view within the data object's window is what is displayed.

The application continues to monitor input until the editing session is complete (UNTIL EDIT_COMPLETE). When the editing session is complete, all data within the data object's view ports are stored within the document.

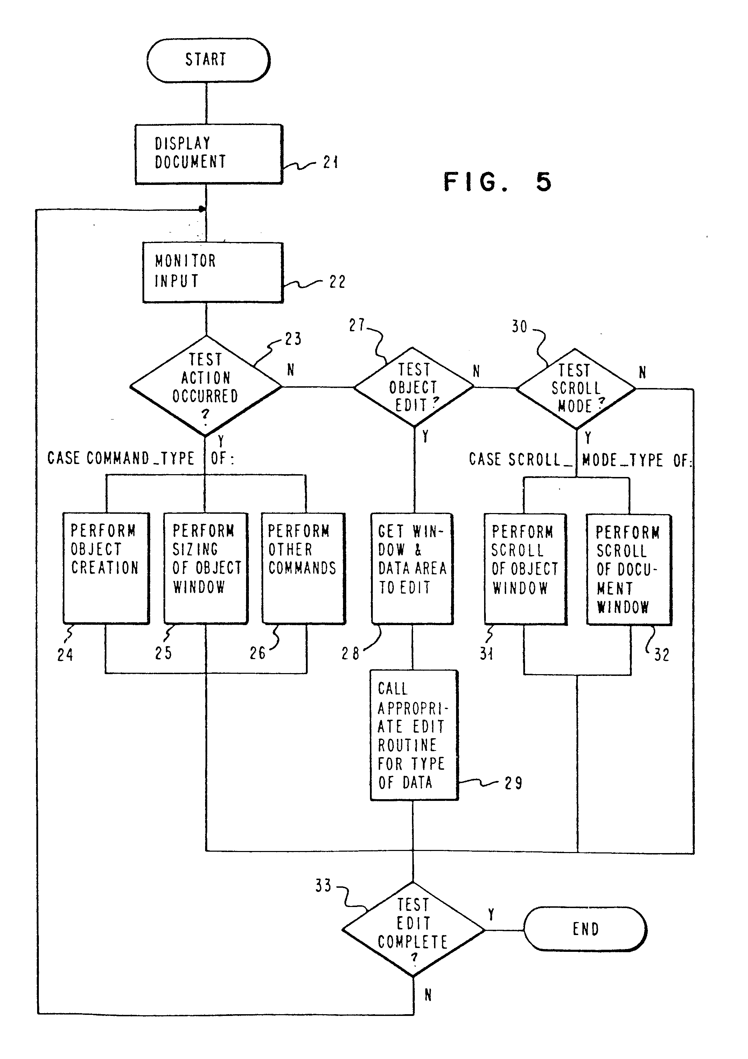

Reference is next made to the flow chart of Figure 5 which illustrates operations performed in tailoring a master document according to this invention.

First, the application initiates the editing session and invokes routines to generate the internal document structure and to display the document data as represented by block 21. Displaying the document involves creating windows and data areas for each object within the document structure. If the document did not exist previously, an empty document is displayed. If the document did exist, a screen full of data information is generated and displayed on the screen. Upon displaying the initial view of the document on the screen, the application is ready to monitor operator input as depicted in block 22. If the input received is to execute an action as shown in block 23, the application determines what type of action occurred. If the operator requested that an object is to be created, the application creates the data object internally, creates the data object's window, and displays the data object on the screen. The process of object creation is shown in block 24. If the operator requested that the size of the data object's window be changed (either increased or decreased), the operator specifies the new size and the application adjusts the size of the object's window. The sizing of the window is shown in block 25. The application will show as much data as will fit within the new window size. If any other actions occur, the application executes those actions as shown in block 26. If an action did not occur, the application determines if object editing is to occur as shown in block 27. If object editing is to occur, the application obtains information about the selected data object's window and data area as shown in block 28, and calls the appropriate edit routine to create/edit the data as depicted in block 29. If object editing is not occurring, the application determines if a scrolling action is to occur as shown in block 30. If a scrolling action it to occur, the application determines what type of scrolling is to take place. If scrolling of the data object is to occur, the application determines the amount of data to scroll, then scrolls that amount of data within the object's window as depicted in block 31. If scrolling of the document is to occur, the application scrolls the document maintaining the view of the data within the object windows as depicted in block 32. The application continues to monitor operator input until editing is complete as shown in block 33.

In summary, a unique method of, and system for, building a specially tailored document from a master document are provided to improve user friendliness and system flexibility, and reduce operator attention. Portions of data objects making up a master document are windowed and displayed to an operator. When a portion is selected, a view port is created into a corresponding data object. The data object can then be scrolled in the view port for obtaining a desired portion of the data object for inclusion in the special document.

## Claims

1. Method of generating a complex multi-object configuration document, from a plurality of data objects (2, 3, 4) stored in the memory of a computer system having a display screen (1), and in which said data objects can be selected for inclusion in said document,

   characterized by the fact that said data objects are parts of a master document which cannot be viewed on a single screen page of said display, and by the following steps :
   a) creating a plurality of windows (8) on said screen,
   b) displaying (21) portions (7) of said data objects of said master document in said windows, respectively,
   c) scrolling (30,31) the displayed portion of a selected one of said plurality of data objects in one of said plurality of windows corresponding thereto and, if necessary, enlarging the size of said window, to position the desired portion of said selected one of said plurality data objects to be included in said document,
   d) storing said desired portion in said computer system,
   e) repeating steps c) and d) until all desired portions of each of the remaining ones of said plurality of data objects to be included in said document are positioned within a respective one of said plurality of windows, and are stored in said computer system, and
   f) terminating (33) the display of windows, whereby said document is made of all said desired portions, arranged in an order corresponding to the order said portions have been stored in said computer system, and can be of any desired size.

2. Method according to claim 1, comprising the additional step of inputting graphic, table and/or alphanumeric data in said first, second, etc... and/or n th window, said data being input through any appropriate data entry device.

3. Method according to claims 1 or 2, wherein said data objects are graphic objects (3).

4. Method according to claim 1, 2 or 3, wherein said data objects are tables (4).

5. Display computer system for generating a complex multi-object configuration document from a plurality of data objects (2, 3, 4) stored in the memory of said computer, comprising means for selecting certain of said data objects for inclusion in said document characterized in that
   - said data objects are parts of a master document which cannot be viewed on a single screen page of said display, and in that it comprises,
   - means for creating a plurality of windows (8) on said screen,
   - means for displaying selected ones of said plurality of data objects in a plurality of windows, respec tively, with a different object in each of said plurality of windows which forms a view port into each respective one of said plurality of data objects when selected,
   - means for enlarging said windows as necessary,
   - means for scrolling each of said selected data objects in a respective one of said plurality of windows to obtain desired portions of said data objects viewable in said respective windows,
   - means for storing said desired portions of data objects viewable in said plurality of windows, in said memory, and
   - means for terminating the display of said plurality of windows whereby said desired portions associated with each of said plurality of data objects, respectively, which are positioned within respective ones of said plurality of windows, are arranged in said document in an order corresponding to the order said desired portions of data objects have been stored in said memory.

6. System according to claim 5, including means to make editing operations within said portions of data object displayed in said windows.

7. System according to claim 5 or 6 including means causing the windows already on the screen to be scrolled to provide room for other windows.

**Revendications**

1. Méthode de construction d'un document complexe à configuration d'objets multiples, à partir d'une pluralité d'objets de données (2,3,4) stockés dans la mémoire d'un système informatique comportant un écran d'affichage (1), et dans laquelle lesdits objets de données peuvent être choisis pour inclusion dans ledit document,

caractérisée par le fait que lesdits objets de données sont des parties d'un document de base qui ne peut pas être visualisé sur une seule page-écran dudit affichage, et par les étapes suivantes :

(a) création d'une pluralité de fenêtres (8) sur ledit écran,

(b) affichage (21) de portions (7) desdits objets de données dudit document de base dans lesdites fenêtres, respectivement,

(c) déplacement (30,31) de la portion affichée d'un objet sélectionné parmi ladite pluralité d'objets de données dans une de ladite pluralité de fenêtres correspondant à cet objet et , si nécessaire, augmentation de la dimension de ladite fenêtre, pour positionner la portion désirée dudit objet sélectionné parmi ladite pluralité d'objets de données à inclure dans ledit document,

(d) stockage de ladite portion désirée dans ledit système informatique,

(e) répétition des étapes (c) et (d) jusqu'à ce que toutes les portions désirées de chacun des objets restants de ladite pluralité d'objets de données à inclure dans ledit document soient positionnées dans une fenêtre respective de ladite pluralité de fenêtres et soient stockées dans ledit système informatique, et

(f) terminaison (33) de l'affichage de fenêtres, de sorte que ledit document est constitué de toutes les dites portions désirées, agencées dans un ordre correspondant à l'ordre dans lequel lesdites portions ont été stockées dans ledit système informatique, et il peut être de toute dimension désirée.

2. Méthode suivant la revendication 1, comprenant l'étape additionnelle d'introduction de données graphiques, de table et/ou alphanumériques dans les dites première, deuxième, etc. ... et/ou $n^{ième}$ fenêtres, lesdites données étant introduites par l'intermédiaire de tout dispositif approprié d'entrée de données.

3. Méthode suivant la revendication 1 ou 2, dans laquelle lesdits objets de données sont des objets graphiques (3).

4. Méthode suivant la revendication 1, 2 ou 3, dans laquelle lesdits objets de données sont des tables (4).

5. Système d'ordinateur à affichage pour construire un document complexe à configuration d'objets multiples à partir d'une pluralité d'objets de données (2,3,4) stockés dans la mémoire dudit ordinateur, comprenant des moyens de sélection de certains desdits objets de données pour inclusion dans ledit document, caractérisé en ce que

lesdits objets de données sont des parties d'un document de base qui ne peut pas être visualisé sur une seule page-écran dudit affichage,

et en ce qu'il comprend

des moyens de création d'une pluralité de fenêtres (8) sur ledit écran,

des moyens d'affichage d'objets sélectionnés parmi ladite pluralité d'objets de données dans une pluralité de fenêtres, respectivement, avec un objet différent dans chacune de ladite pluralité de fenêtres qui définit un cadre d'observation dans chaque objet respectif de ladite pluralité d'objets de données lorsque cet objet est sélectionné,

des moyens d'agrandissement des dites fenêtres comme nécessaire,

des moyens de déplacement de chacun desdits objets de données sélectionnés dans une fenêtre respective de ladite pluralité de fenêtres pour obtenir des portions désirées desdits objets de données visibles dans lesdites fenêtres respectives,

des moyens de stockage desdites portions désirées des objets de données visibles dans ladite pluralité de fenêtres, dans ladite mémoire, et

des moyens de terminaison de l'affichage de ladite pluralité de fenêtres, de sorte que lesdites portions désirées associées à chacun de ladite pluralité d'objets de données, respectivement, qui sont positionnées dans des fenêtres respectives de ladite pluralité de fenêtres, sont agencées dans ledit document dans un ordre correspondant à l' ordre dans lequel lesdites portions désirées d'objets de données ont été stockées dans ladite mémoire.

6. Système suivant la revendication 5, comprenant des moyens pour effectuer des opérations de composition dans lesdites portions d'objets de données affichées dans lesdites fenêtres.

7. Système suivant la revendication 5 ou 6, comprenant des moyens pour effectuer un défilement des fenêtres déjà sur l'écran, afin de procurer de la place pour d'autres fenêtres.

**Patentansprüche**

1. Verfahren zum Erstellen eines Dokuments mit einer komplexen Mehroobjektkonfiguration aus einer Mehrzahl von Datenobjekten (2, 3, 4), die in dem Speicher eines Rechnersystems mit einem Anzeigeschirm (1) gespeichert sind und bei welchem die Datenobjekte zum Aufnehmen in das Dokument ausgewählt werden können, dadurch gekennzeichnet, daß die Datenobjekte Teile eines Master-Dokuments sind, das auf einer einzigen Anzeigeseite der Anzeige nicht gesehen werden kann und durch die folgenden Schritte:
a) Erzeugen einer Mehrzahl von Fenstern (8) auf dem Schirm,
b) Anzeigen (21) von Abschnitten (7) der Datenobjekte der Master-Dokuments jeweils in den Fernstern,
c) Rollen (30, 31) des angezeigten Abschnitts eines ausgewählten der Mehrzahl von Datenobjekten in einem der Mehrzahl von Fenstern, welche diesen entsprechen und falls notwendig, Vergrößern der Abmessung des Fensters, um den gewünschten Abschnitt des ausgewählten der Mehrzahl von Datenobjekten einzustellen, die in das Dokument aufgenommen werden sollen,
d) Speichern des gewünschten Abschnitts in dem Rechnersystem,
e) Wiederholen der Schritte c) und d) solange, bis alle gewünschten Abschnitte jedes der übrigen der Mehrzahl von Datenobjekten, die in das Dokument aufgenommen werden sollen, innerhalb eines entsprechenden der Mehrzahl von Fenstern eingestellt und in dem Rechnersystem gespeichert sind und
f) Beenden (33) der Anzeige von Fenstern, wodurch das Dokument aus allen gewünschten Abschnitten erstellt ist, in einer Reihenfolge angeordnet ist, welche der Reihenfolge der Abschnitte entspricht, die in dem Rechnersystem gespeichert wurden und jede gewünschte Abmessung aufweisen kann.

2. Verfahren nach Anspruch 1, welches den zusätzlichen Schritt des Eingebens von Graphik-, Tabellen- und/oder alphanumerischen Daten in dem ersten, zweiten, usw.... und/oder n-ten Fenster umfaßt, wobei die Daten über irgendeine geeignete Dateneingangseinrichtung eingegeben werden.

3. Verfahren nach Ansprüchen 1 oder 2, bei welchem die Datenobjekte Graphik-Objekte (3) sind.

4. Verfahren nach Anspruch 1, 2 oder 3, bei welchem die Datenobjekte Tabellen (4) sind.

5. Anzeigerechnersystem zum Erstellen eines Dokuments mit einer komplexen Mehrobjektkonfiguration aus einer Mehrzahl von Datenobjekten (2, 3, 4), die in dem Speicher des Rechners gespeichert sind, welches Mittel zum Auswählen gewisser der Datenobjekte zum Aufnehmen in das Dokument aufweist, dadurch gekennzeichnet, daß die Datenobjekte Teile eines Master-Dokuments sind, das auf einer einzigen Anzeigeseite der Anzeige nicht gesehen werden kann und daß dieses aufweist:
Mittel zum Erzeugen einer Mehrzahl von Fenstern (8) auf dem Schirm, ein Mittel zum Anzeigen ausgewählter der Mehrzahl von Datenobjekten jeweils in einer Mehrzahl von Fenstern mit einem unterschiedlichen Objekt in jedem der Mehrzahl von Fenstern, das ein Beobachtungsfenster in jedem entsprechenden der Mehrzahl von Datenobjekten ausbildet, wenn ausgewählt,
Mittel zum Vergrößern der Fenster, wie erforderlich, Mittel zum Rollen jedes der ausgewählten Datenobjekte in einem entsprechenden der Mehrzahl von Fenstern, um gewünschte Abschnitte der Datenobjekte in den entsprechenden Fenstern als sichtbar zu erhalten, Mittel zum Speichern der gewünschten Abschnitte von Datenobjekten in dem Speicher, die in der Mehrzahl von Fenstern sichtbar sind und Mittel zum Beenden der Anzeige der Mehrzahl von Fenstern, wodurch die gewünschten Abschnitte, die jedem der Mehrzahl innerhalb entsprechender der Mehrzahl von Fenstern eingestellter Datenobjekte jeweils zugeordnet sind, in dem Dokument in einer Reihenfolge angeordnet sind, welche der Reihenfolge der gewünschten Abschnitte von Datenobjekten entspricht, die in dem Speicher gespeichert wurden.

6. System nach Anspruch 5, das Mittel zum Durchführen von Aufbereitungsarbeitsgängen innerhalb der Abschnitte von Datenobjekten aufweist, die in den Fenstern angezeigt sind.

7. System nach Anspruch 5 oder 6, das Mittel aufweist die bewirken, daß die bereits auf dem Schirm befindlichen Fenster gerollt werden, um Raum für andere Fenster bereitzustellen.

P  THIS IS PARAGRAPH TEXT INSIDE OF
A PAGE OBJECT.  THE OBJECTS  WHICH
FOLLOW  ARE A GRAPHIC AND  TABLE
OBJECT.

G

RECTANGLE

T

F I G.  1

FIG. 2

EP 0 185 904 B1

FIG. 3

P THIS IS PARAGRAPH TEXT INSIDE OF
A PAGE OBJECT. THE OBJECTS WHICH
FOLLOW ARE A GRAPHIC AND TABLE
OBJECT.

EP 0 185 904 B1

P    THIS IS PARAGRAPH TEXT INSIDE OF A PAGE OBJECT. THE OBJECTS WHICH FOLLOW ARE A GRAPHIC AND TABLE OBJECT.

G

RECTANGLE

T

5

8

11

RECTANGLE

FIG. 4

FIG. 5

START

DISPLAY
DOCUMENT — 21

MONITOR
INPUT — 22

TEST
ACTION
OCCURRED
? — 23

N

TEST
OBJECT
EDIT ? — 27

N

TEST
SCROLL
MODE ? — 30

N

Y

CASE COMMAND_TYPE OF:

Y

Y

CASE SCROLL_MODE_TYPE OF:

PERFORM
OBJECT
CREATION — 24

PERFORM
SIZING
OF OBJECT
WINDOW — 25

PERFORM
OTHER
COMMANDS — 26

GET WIN-
DOW &
DATA AREA
TO EDIT — 28

PERFORM
SCROLL
OF OBJECT
WINDOW — 31

PERFORM
SCROLL
OF DOCU-
MENT
WINDOW — 32

CALL
APPROPRI-
ATE EDIT
ROUTINE
FOR TYPE
OF DATA — 29

TEST
EDIT
COMPLETE
? — 33

Y

END

N